# EUROPÄISCHE PATENTSCHRIFT

(11) **EP 3 441 660 B1**
(45) Veröffentlichungstag und Bekanntmachung des Hinweises auf die Patenterteilung: **23.06.2021**
(21) Anmeldenummer: 18186242.6
(22) Anmeldetag: 30.07.2018
(51) Int. Cl.: F16L 41/08, E03F 3/04

(54) **ANSCHLUSSVORRICHTUNG**
CONNECTION DEVICE
DISPOSITIF DE RACCORDEMENT

(30) Priorität: 07.08.2017 DE 202017104710 U
(43) Veröffentlichungstag der Anmeldung: 13.02.2019
(73) Patentinhaber: REHAU AG + Co, 95111 Rehau (DE)
(72) Erfinder: Schneider, Christoph, 91074 Herzogenaurach (DE); Sieber, Jürgen, 91074 Herzogenaurach (DE); Hendel, Roland, 91086 Aurachtal (DE); Ciolak, Mariusz, 91052 Erlangen (DE); Lipphardt, Tobias, 90762 Fürth (DE)

(56) Entgegenhaltungen:
- EP-A1- 2 281 137
- DE-U1- 29 918 122
- DE-U1-202006 005 685
- US-A1- 2002 139 952

## Beschreibung

Die Erfindung betrifft eine Anschlussvorrichtung, die einen Elastomereinsatz und einen Anschlussstutzen umfasst.

Des Weiteren betrifft die Erfindung ein Fluidleit-, -aufnahme- und -speichersystem mit einer solchen Anschlussvorrichtung.

Eine gattungsgemäße Anschlussvorrichtung, die einen Elastomereinsatz und einen Anschlussstutzen umfasst, ist aus der DE 20 2006 005 685 U1 bekannt. Eine solche Anschlussvorrichtung ist geeignet, eine Nebenrohrleitung fluiddicht an eine Queröffnung in einer Hauptleitung, einem Schacht oder einer Wand anzuschließen. Derartige Anschlussvorrichtungen müssen sicher installierbar und dauerhaft sein und eine hohe Fluiddichtheit aufweisen.

Zur Herstellung der Anschlussvorrichtung wird zunächst der Elastomereinsatz in die Queröffnung einer Hauptleitung, eines Schachtes oder einer Wand eingesetzt, und anschließend der Anschlussstutzen in den Elastomereinsatz eingeschraubt, um die Außenfläche des Elastomereinsatzes möglichst großflächig an die Laibung der Queröffnung anzupressen.

Zum Einschrauben ist an der Innenseite des hohlstopfenförmig ausgebildeten Elastomereinsatzes ein Innengewinde ausgebildet, entsprechend an der Außenseite des Anschlussstutzens ein Außengewinde. Zum Einschrauben des Anschlussstutzens in den Elastomereinsatz zur Bildung der Anschlussvorrichtung wird im Allgemeinen ein Drehwerkzeug benutzt.

Es hat sich herausgestellt, dass die Fluiddichtheit einer solchen Anschlussvorrichtung bei nicht sachgerechter Installation, insbesondere bei nichtaxialem Einschrauben des Anschlussstutzens in den Elastomereinsatz, gegebenenfalls zu Undichtigkeiten führt und daher verbesserungsbedürftig ist.

So kann es in besonderen Fällen vorkommen, dass Fluid sich einen Weg sucht zwischen dem Außengewinde an der Außenseite des Anschlussstutzens und dem Innengewinde an der Innenseite des Elastomereinsatzes und unerwünscht aus der Anschlussvorrichtung nach außen oder von außen in die Anschlussvorrichtung dringt.

Hier setzt die Erfindung ein, der die Aufgabe zugrunde liegt, eine verbesserte Anschlussvorrichtung bereitzustellen, die gegenüber der bekannten Lösung des Standes der Technik eine verbesserte Fluiddichtheit aufweist.

Eine weitere Aufgabe der Erfindung ist es, ein Fluidleit-, -aufnahme- und -speichersystem bereitzustellen, welches eine solche Anschlussvorrichtung umfasst.

Die erste gestellte Aufgabe wird durch die Anschlussvorrichtung gemäß Anspruch 1 gelöst.

Es ist im Rahmen der vorliegenden Erfindung vorgesehen, dass die Anschlussvorrichtung für eine Nebenrohrleitung in Kombination mit einer Queröffnung in einer Hauptrohrleitung, in einem Schacht oder in einer Wand einen hohlstopfenförmigen, relativ weichen Elastomereinsatz und einen relativ härteren Anschlussstutzen umfasst, wobei der Elastomereinsatz, dessen Außenseite an die Queröffnung angepasst ist, an seiner Innenseite einen konischen Schraubbereich aufweist, und der Anschlussstutzen ein Eingriffsende, einen konischen Mittelteil mit Außengewinde, einen Aufnahmeabschnitt und ein Antriebsende.

Die erfindungsgemäße Anschlussvorrichtung zeichnet sich dadurch aus, dass der Elastomereinsatz an der Innenseite wenigstens ein Dichtelement aufweist, und dass der Anschlussstutzen am konischen Mittelteil eine Dichtfläche aufweist, wobei bei montierter Anschlussvorrichtung, bei der der Anschlussstutzen in den Elastomereinsatz eingeschraubt ist, das Dichtelement an der Innenseite des Elastomereinsatzes an der Dichtfläche am konischen Mittelteil des Anschlussstutzens anliegt.

Durch das Vorsehen gemäß vorliegender Erfindung, dass bei montierter Anschlussvorrichtung, bei der der Anschlussstutzen in den Elastomereinsatz eingeschraubt ist, das Dichtelement an der Innenseite des Elastomereinsatzes an der Dichtfläche am konischen Mittelteil des Anschlussstutzens anliegt, ist eine verbesserte Anschlussvorrichtung geschaffen, die eine erhöhte Fluiddichtheit aufweist.

So kann insbesondere Fluid, das zwischen den Anschlussstutzen und den Elastomereinsatz gelangt, aufgrund des an der Dichtfläche anliegenden Dichtelements nicht weiterwandern, und nicht unerwünscht aus der Anschlussvorrichtung austreten bzw. von außen in die Anschlussvorrichtung eintreten.

Erfindungsgemäß ist das Dichtelement an der Innenseite des Elastomereinsatzes als Lippe ausgebildet.

Ein als Lippe ausgebildetes Dichtelement an der Innenseite des Elastomereinsatzes ist besonders dafür ausgebildet, eine hohe Fluiddichtheit der erfindungsgemäßen Anschlussvorrichtung sicherzustellen.

Bei der vorliegenden Erfindung kann sich als sehr vorteilhaft erweisen, wenn vorgesehen ist, dass das Dichtelement einstückig mit dem Elastomereinsatz ausgebildet ist, oder dass das Dichtelement in einem Aufnahmeabschnitt des Elastomereinsatzes aufgenommen ist. Wenn das Dichtelement einstückig mit dem Elastomereinsatz ausgebildet ist, kann ein derartiger Elastomereinsatz in einem einfachen Fertigungsverfahren hergestellt werden, indem in dem zur Formgebung des Elastomereinsatzes vorgesehenen Werkzeug eine entsprechende Kontur und ein entsprechender Freiraum zur Formung des Dichtelements ausgebildet ist.

Bei einem Dichtelement, das in einem Aufnahmeabschnitt des Elastomereinsatzes aufgenommen ist, kann vorgesehen sein, dass das Dichtelement aus einem anderen Material besteht, als der Elastomereinsatz. Hierdurch ist es möglich, das Dichtelement aus einem Material mit beispielsweise einer anderen Härte herzustellen, als der Elastomereinsatz. Auch kann auf diese Weise eine individuelle Fertigung von Elastomereinsätzen mit Lippen oder Wülsten als Dichtelementen je nach Vorgabe des Kunden oder der technischen Notwendigkeit in einfacher Weise stattfinden.

Als besonders vorteilhaft kann sich bei der vorliegenden Erfindung ergeben, wenn vorgesehen ist, dass zwei oder drei oder vier Dichtelemente an der Innenseite des Elastomereinsatzes ausgebildet sind.

Durch die vorstehend beschriebene Maßnahme kann eine Ausbildung der Anschlussvorrichtung genau nach der Kundenspezifikation oder nach technischen Anforderungen erfolgen.

Als besonders günstig kann sich bei der vorliegenden Erfindung ergeben, wenn vorgesehen ist, dass die Dichtfläche am konischen Mittelteil des Anschlussstutzens als Kegelmantelabschnittsfläche ausgebildet ist.

Durch die Ausbildung der Dichtfläche am konische Mittelteil des Anschlussstutzens in Form einer Kegelmantelabschnittsfläche wird eine besonders hohe Fluiddichtheit erreicht, wenn sich an diese Dichtfläche ein Dichtelement anlegt.

In weiterer Fortbildung der vorliegenden Erfindung kann sich als sehr günstig erweisen, wenn vorgesehen ist, dass die Dichtfläche am konischen Mittelteil des Anschlussstutzens um den konischen Mittelteil herumlaufend ausgebildet ist.

Durch die Ausbildung der Dichtfläche am konischen Mittelteil des Anschlussstutzens derart, dass diese um den konischen Mittelteil herumlaufend ausgebildet ist, kann eine besonders fluiddicht installierbare Anschlussvorrichtung bereitgestellt werden.

In besonders vorteilhafter Weise kann bei der vorliegenden Erfindung vorgesehen sein, dass der Elastomereinsatz aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) ist und / oder der Anschlussstutzen aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Elastomermaterialien bzw. Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus diesen Materialien den Elastomereinsatz bzw. den Anschlussstutzen zu bilden.

Mit Vorteil kann ein solcher erfindungsgemäßer Elastomereinsatz bzw. ein solcher erfindungsgemäßer Anschlussstutzen mit Hilfe eines Polymerformgebungsverfahrens hergestellt sein.

Insbesondere durch ein Spritzgussverfahren und / oder ein Blasverfahren und / oder ein Thermoformverfahren und / oder ein Pressverfahren kann ein derartiger Elastomereinsatz bzw, ein derartiger Anschlussstutzen leicht fertigbar sein.

Alternativ kann vorgesehen sein, dass der Elastomereinsatz und / oder der Anschlussstutzen unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Elastomereinsatz und / oder einen Anschlussstutzen. Hierbei umfasst das Verfahren insbesondere auch die Eingabe von Daten, die einen Elastomereinsatz und / oder einen Anschlussstutzen darstellen, in eine Datenverarbeitungsmaschine und die Nutzung der Daten, um einen Elastomereinsatz und / oder einen Anschlussstutzen als dreidimensionales Modell darzustellen, wobei das dreidimensionale Modell geeignet ist zur Nutzung bei der Herstellung eines Elastomereinsatzes und / oder eines Anschlussstutzens. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Elastomereinsatz und / oder einen Anschlussstutzen abgegeben wird und die reflektierte Energie empfangen wird, und wobei ein virtuelles dreidimensionales Modell eines Elastomereinsatzes und / oder eines Anschlussstutzens unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Aufgabe der vorliegenden Erfindung, ein Fluidleit-, -aufnahme- und -speichersystem anzugeben, erfährt ihre Lösung in Anspruch 7.

Das erfindungsgemäße Fluidleit-, -aufnahme- und -speichersystem umfasst eine Nebenrohrleitung, eine Hauptrohrleitung und / oder einen Schacht und / oder eine Wand, und eine Anschlussvorrichtung für eine Nebenrohrleitung in Kombination mit einer Queröffnung in einer Hauptrohrleitung, in einem Schacht oder in einer Wand gemäß vorstehender Beschreibung.

Anwendung findet die vorliegende Erfindung insbesondere im Bereich der Kanal- und Abwassertechnik.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus der zugehörigen Figurenbeschreibung.

Bevorzugte Ausführungsbeispiele der Erfindung sind in den Fig. dargestellt und werden in der nachfolgenden Beschreibung näher ausgeführt.

Die Erfindung wird anhand der beigefügten Figuren näher erläutert.

Hierzu zeigt:
- Fig. 1:: einen schematischen Querschnitt durch einen Elastomereinsatz;
- Fig. 2:: eine schematische seitliche Außenansicht eines Anschlussstutzens,
- Fig.3:: eine schematische teilweise geschnittene seitliche Außenansicht einer Anschlussvorrichtung;
- Fig. 4:: ein Detail aus der Fig. 3;
- Fig. 5:: eine schematische geschnittene Detailansicht eines in einen Elastomereinsatz eingesteckten Anschlussstutzens;
- Fig. 6:: eine schematische geschnittene Detailansicht eines in einen Elastomereinsatz eingeschraubten Anschlussstutzens.

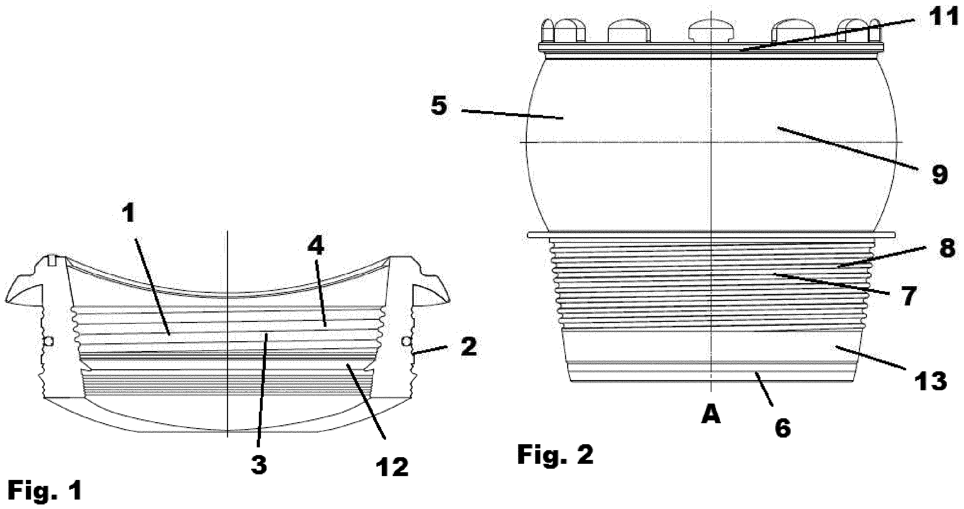

In der Fig. 1 ist ein schematischer Querschnitt durch einen Elastomereinsatz 1 gezeigt. Der Elastomereinsatz 1 weist eine Außenseite 2 auf, die an die Queröffnung angepasst ist, in die er eingesetzt werden soll.

Die Innenseite 3 des Elastomereinsatzes 1 weist einen konischen Schraubbereich 4 auf, hierzu ist ein Innengewinde ausgebildet. An der Innenseite 3 des Elastomereinsatzes ist weiterhin ein Dichtelement 12 in Form einer Lippe ausgebildet, welche unmittelbar nach dem konischen Schraubbereich 4 an der Innenseite 3 des Elastomereinsatzes 1 im Bereich der zunehmenden Konizität ausgebildet ist.

Das Dichtelement 12 steht nach innen in den Freiraum des Elastomereinsatzes 1, der durch die Innenseite 3 begrenzt wird, vor.

Das Dichtelement 12 ist entlang des gesamten Innenumfangs an der Innenseite 3 des Elastomereinsatzes 1 in gleichmäßiger Weise, insbesondere mit gleichem Querschnitt, ausgebildet.

In der Fig. 2 ist eine schematische seitliche Außenansicht eines Anschlussstutzens 5 gezeigt.

Der Anschlussstutzen 5 weist ein Eingriffsende 6 auf, mit dem voran er in den Elastomereinsatz 1 einsteckbar und anschließend einschraubbar ist. Der Anschlussstutzen 5 umfasst weiterhin einen konischen Mittelteil 7, an dem ein Außengewinde 8 ausgebildet ist. Anschließend an den konischen Mittelteil 7 des Anschlussstutzens 5 ist ein Aufnahmeabschnitt 9 ausgebildet, der derartig ausgebildet ist, dass ein hier nicht gezeigtes Nebenrohr fluiddicht mit dem Anschlussstutzen 5 verbindbar ist.

An den Aufnahmeabschnitt 9 des Anschlussstutzens 5 grenzt das Antriebsende 11 an, an dem Fortsätze ausgebildet sind, die dazu geeignet sind, den Anschlussstutzen 5 mithilfe eines Drehwerkzeugs in den Elastomereinsatz 1 einzuschrauben.

Zwischen dem Eingriffsende 6 des Anschlussstutzens 5 und dem konischen Mittelteil 7 ist eine Dichtfläche 13 ausgebildet, die in Form einer Kegelmantelabschnittsfläche ausgebildet ist.

Die Dichtfläche 13 zieht sich um den gesamten Anschlussstutzen 5 herum und weist an allen Stellen die gleiche Neigung gegenüber der Achse A des Anschlussstutzens 5 auf.

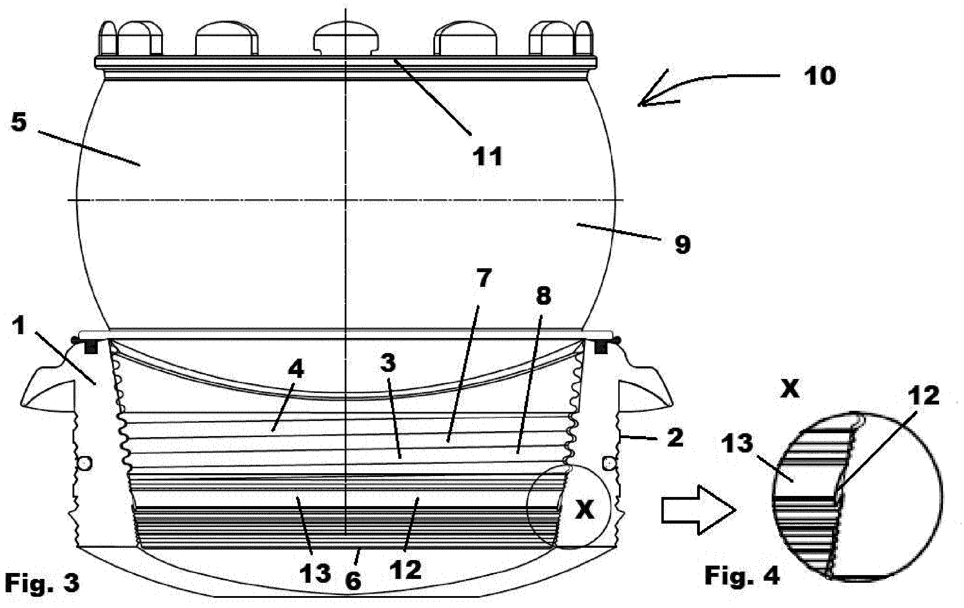

In der Fig. 3 ist eine schematische teilweise geschnittene seitliche Außenansicht einer Anschlussvorrichtung 10 gezeigt.

Die Bezugszeichen in Fig. 3 entsprechen denen aus den vorangehenden Figuren.

Bei der dargestellten Anschlussvorrichtung 10 ist der Anschlussstutzen 5 in den Elastomereinsatz 1 vollständig eingeschraubt. Hierzu interagiert das an der Innenseite 3 des Elastomereinsatzes 1 ausgebildete Innengewinde am konischen Schraubbereich 4 mit dem Au-ßengewinde 8 am konischen Mittelteil 7 des Anschlussstutzens.

Durch das vollständige Einschrauben des Anschlussstutzens 5 in den Elastomereinsatz 1, durch den die Anschlussvorrichtung 10 gebildet ist, kontaktiert das Dichtelement 12 in Form einer Lippe an der Innenseite 3 des Elastomereinsatzes 1 die Dichtfläche 13 am Anschlussstutzen 5 und sorgt so für die fluiddichte Verbindung des Anschlussstutzens 5 mit dem Elastomereinsatz 1.

In der Fig. 4 ist ein Detail X aus der Fig. 3 gezeigt.

Die Bezugszeichen in Fig. 4 entsprechen denen aus den vorangehenden Figuren.

Das Detail X der Fig. 3 ist in der Fig. 4 vergrößert dargestellt. Gezeigt ist, dass das Dichtelement 12 in Form einer Lippe, welche an der Innenseite 3 des Elastomereinsatzes 1 ausgebildet ist, in einem flächigen Presskontakt mit der Dichtfläche 13 an der Außenoberfläche des Anschlussstutzens 5 steht.

Dadurch ist eine fluiddichte Verbindung zwischen dem Anschlussstutzen 5 und dem Elastomereinsatz 1 geschaffen.

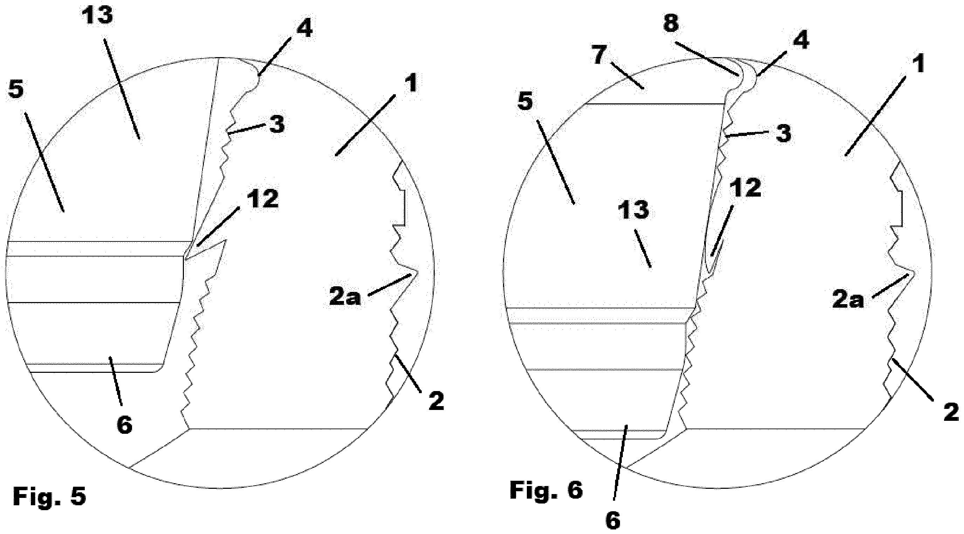

In der Fig. 5 ist eine schematische geschnittene Detailansicht eines in einen Elastomereinsatz 1 eingesteckten Anschlussstutzens 5 dargestellt.

Die Bezugszeichen in Fig. 5 entsprechen denen aus den vorangehenden Figuren.

In der Fig. 5 ist der Zustand gezeigt, bei dem der Anschlussstutzen 5 mit dem Eingriffsende 6 des Anschlussstutzens 5 voran in den Elastomereinsatz 1 eingesteckt ist. Vom Elastomereinsatz 1 steht an dessen Innenseite 3 das Dichtelement 12 in Form einer Lippe hervor.

Das Dichtelement 12 in Form einer Lippe ist entlang des gesamten Innenumfangs an der Innenseite 3 des Elastomereinsatzes 1 in gleichmäßiger Weise, insbesondere mit gleichem Querschnitt, ausgebildet.

Die Dichtfläche 13 des Anschlussstutzens 5 zieht sich um den gesamten Anschlussstutzen 5 herum und weist an allen Stellen die gleiche Neigung gegenüber der hier nicht gezeigten Achse A des Anschlussstutzens 5 auf.

In der Fig. 6 ist eine schematische geschnittene Detailansicht eines in einen Elastomereinsatz 1 eingeschraubten Anschlussstutzens 5 gezeigt.

Die Bezugszeichen in Fig. 6 entsprechen denen der vorangehenden Figuren.

In den in Fig. 6 gezeigten Zustand ist der Anschlussstutzen 5 mit dem Elastomereinsatz 1 verschraubt und bildet so die Anschlussvorrichtung 10.

Für die Verschraubung interagiert das Außengewinde 8 am konischen Mittelteil 7 des Anschlussstutzens 5 mit dem Innengewinde des konischen Schraubbereichs 4 am Elastomereinsatz 1.

Im vollständig verschraubten Zustand des Anschlussstutzens 5 und des Elastomereinsatzes 1 zur Anschlussvorrichtung 10 kontaktiert das Dichtelement 12 in Form einer Lippe durch eine flächige Pressung die Dichtfläche 13 des Anschlussstutzens 5 über den gesamten Umfang.

Hierzu ist das Dichtelement 12 in Form einer Lippe, die von der Innenseite 3 hervorsteht, durch die Dichtfläche 13 zur Innenseite 3 des Elastomereinsatzes 1 hin umgelegt. Durch die umgelegte Lippe wird eine fluiddichte Verbindung des Anschlussstutzens 5 und des Elastomereinsatzes 1 zur Anschlussvorrichtung 10 hergestellt.

Durch die umgelegte Lippe erfolgt eine erhöhte Anpressung der Außenseite 2 des Elastomereinsatzes 1 an die Laibung der Queröffnung in einer Hauptrohrleitung, in einem Schacht oder in einer Wand in dem Abschnitt der Außenseite 2, die der umgelegten Lippe gegenüberliegt, was eine verbesserte Dichtheit an dieser Stelle bewirkt.

In einer besonderen Ausgestaltung der Erfindung ist vorgesehen, dass dem Dichtelement 12 etwa gegenüberliegend ein Dichtvorsprung 2a an der Außenseite 2 des Elastomereinsatzes 1 vorgesehen ist, der beim Einschrauben des Anschlussstutzens 5 in den Elastomereinsatz 1 gegen die Laibung der Queröffnung in einer Hauptrohrleitung, in einem Schacht oder in einer Wand gepresst wird und an dieser Stelle für eine verbesserte Fluiddichtheit und eine größere zulässige Bohrlochtoleranz für die Queröffnung sorgt.

### Bezugszeichenliste

- 1: Elastomereinsatz
- 2: Außenseite
- 2a: Dichtvorsprung
- 3: Innenseite
- 4: konischer Schraubbereich
- 5: Anschlussstutzen
- 6: Eingriffsende
- 7: konischer Mittelteil
- 8: Außengewinde
- 9: Aufnahmeabschnitt
- 10: Anschlussvorrichtung
- 11: Antriebsende
- 12: Dichtelement
- 13: Dichtfläche
- 20: Fluidleit-, -aufnahme- und -speichersystem
- A: Achse
- X: Detail

## Patentansprüche

1. Anschlussvorrichtung (10) für eine Nebenrohrleitung in Kombination mit einer Queröffnung in einer Hauptrohrleitung, in einem Schacht oder in einer Wand, umfassend:
einen hohlstopfenförmigen, relativ weichen Elastomereinsatz (1), dessen Außenseite (2) an die Queröffnung angepasst ist, und dessen Innenseite (3) einen konischen Schraubbereich (4) aufweist, und
einen relativ härteren Anschlussstutzen (5), der ein Eingriffsende (6), einen konischen Mittelteil (7) mit Außengewinde (8), einen Aufnahmeabschnitt (9) und ein Antriebsende (11) aufweist,
wobei der Elastomereinsatz (1) an der Innenseite (3) wenigstens ein Dichtelement (12) aufweist,
und der Anschlussstutzen (5) am konischen Mittelteil (7) eine Dichtfläche (13) aufweist,
**dadurch gekennzeichnet,**
**dass** das Dichtelement (12) in Form einer Lippe ausgebildet ist, die von der Innenseite (3) des Elastomereinsatzes (1) hervorsteht,
wobei bei montierter Anschlussvorrichtung (10), bei der der Anschlussstutzen (5) in den Elastomereinsatz (1) eingeschraubt ist, das Dichtelement (12) an der Innenseite (3) des Elastomereinsatzes (1) an der Dichtfläche (13) am konischen Mittelteil (7) des Anschlussstutzens (5) anliegt.

2. Anschlussvorrichtung (10) nach Anspruch 1, **dadurch gekennzeichnet, dass** das Dichtelement (12) einstückig mit dem Elastomereinsatz (1) ausgebildet ist, oder dass das Dichtelement (12) in einem Aufnahmeabschnitt des Elastomereinsatzes (1) aufgenommen ist.

3. Anschlussvorrichtung (10) nach einem der Ansprüche 1 oder 2, **dadurch gekennzeichnet, dass** zwei oder drei oder vier Dichtelemente (12) an der Innenseite (3) des Elastomereinsatzes (1) ausgebildet sind.

4. Anschlussvorrichtung (10) nach einem der vorangehenden Ansprüche, **dadurch gekennzeichnet, dass** die Dichtfläche (13) am konischen Mittelteil (7) des Anschlussstutzens (5) als Kegelmantelabschnittsfläche ausgebildet ist.

5. Anschlussvorrichtung (10) nach einem der vorangehenden Ansprüche, **dadurch gekennzeichnet, dass** die Dichtfläche (13) am konischen Mittelteil (7) des Anschlussstutzens (5) um den konischen Mittelteil (7) herumlaufend ausgebildet ist.

6. Anschlussvorrichtung (10) nach einem der vorangehenden Ansprüche, **dadurch gekennzeichnet, dass** der Elastomereinsatz aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) ist und / oder der Anschlussstutzen aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

7. Fluidleit-, -aufnahme- und -speichersystem (20) umfassend eine Nebenrohrleitung, eine Hauptrohrleitung und / oder einen Schacht und / oder eine Wand, und eine Anschlussvor-richtung (10) für eine Nebenrohrleitung in Kombination mit einer Queröffnung in einer Haupt-rohrleitung, in einem Schacht oder in einer Wand , nach einem der Ansprüche 1 bis 6.

## Claims

1. Connection device (10) for secondary piping in combination with a transverse opening in main piping, in a shaft or in a wall, comprising:
a relatively soft elastomer insert (1) in the form of a hollow plug, the outside (2) of which insert is adapted to the transverse opening, and the inside (3) of which has a conical screwing region (4), and
a relatively harder connecting branch (5), which has an engagement end (6), a conical middle part (7) with external thread (8), a receiving portion (9) and a drive end (11),
wherein the elastomer insert (1) has at least one sealing element (12) on the inside (3),
and the connecting branch (5) has a sealing face (13) on the conical middle part (7),
**characterised in that**
the sealing element (12) is in the form of a lip which protrudes from the inside (3) of the elastomer insert (1),
wherein when the connection device (10) is assembled, with the connecting branch (5) screwed into the elastomer insert (1), the sealing element (12) on the inside (3) of the elastomer insert (1) lies against the sealing face (13) on the conical middle part (7) of the connecting branch (5).

2. Connection device (10) according to claim 1, **characterised in that** the sealing element (12) is formed in one piece with the elastomer insert (1), or **in that** the sealing element (12) is received in a receiving portion of the elastomer insert (1).

3. Connection device (10) according to one of claims 1 or 2, **characterised in that** two or three or four sealing elements (12) are formed on the inside (3) of the elastomer insert (1).

4. Connection device (10) according to one of the preceding claims, **characterised in that** the sealing face (13) on the conical middle part (7) of the connecting branch (5) is formed as a cone envelope portion face.

5. Connection device (10) according to one of the preceding claims, **characterised in that** the sealing face (13) on the conical middle part (7) of the connecting branch (5) is formed running around the conical middle part (7).

6. Connection device (10) according to one of the preceding claims, **characterised in that** the elastomer insert consists of an elastomer material or contains an elastomer material, the elastomer material preferably being a vulcanised rubber or a thermoplastic elastomer or a rubber or a nitrile rubber or a butyl rubber or an EPDM (ethylene/propylene/diene rubber) or an SBR (styrene/butadiene rubber) and/or the connecting branch consists of a polymer material or contains a polymer material, the polymer material preferably being a thermoplastic material, and particularly preferably a polyolefin, such as for example a polypropylene or a polyethylene or a polybutylene, or a copolymer of the aforementioned, or a cross-linked polyolefin, in particular a cross-linked polyethylene, or a polyvinyl chloride, or a polyurethane.

7. Fluid-conducting, receiving and storage system (20) comprising secondary piping, main piping and/or a shaft and/or a wall, and a connection device (10) for secondary piping in combination with a transverse opening in main piping, in a shaft or in a wall, according to one of claims 1 to 6.

## Revendications

1. Dispositif de raccordement (10) pour une conduite secondaire en combinaison avec une ouverture transversale dans une conduite principale, dans une gaine ou dans un mur, comprenant :
un insert en élastomère (1) relativement souple en forme de bouchon creux, dont le côté extérieur (2) est adapté à l'ouverture transversale et dont le côté intérieur (3) comporte une zone de vissage (4) conique, et
un raccord (5) relativement plus dur, qui comporte une extrémité d'engagement (6), une partie centrale (7) conique dotée d'un filetage externe (8), une partie de réception (9) et
une extrémité d'entraînement (11),
l'insert en élastomère (1) comportant, sur le côté intérieur (3), au moins un élément d'étanchéité (12),
et le raccord (5) comportant, sur la partie centrale (7) conique, une surface d'étanchéité (13),
**caractérisé en ce que**
l'élément d'étanchéité (12) est réalisé sous la forme d'une lèvre, qui dépasse du côté intérieur (3) de l'insert en élastomère (1),
dans lequel, lorsque le dispositif de raccordement (10) est monté, avec le raccord (5) vissé dans l'insert en élastomère (1), l'élément d'étanchéité (12) situé sur le côté intérieur (3) de l'insert en élastomère (1) appuie contre la surface d'étanchéité (13) située sur la partie centrale (7) conique du raccord (5).

2. Dispositif de raccordement (10) selon la revendication 1, **caractérisé en ce que** l'élément d'étanchéité (12) est réalisé d'un seul tenant avec l'insert en élastomère (1) ou **en ce que** l'élément d'étanchéité (12) est reçu dans une partie de réception de l'insert en élastomère (1).

3. Dispositif de raccordement (10) selon l'une des revendications 1 ou 2, **caractérisé en ce que** deux ou trois ou quatre éléments d'étanchéité (12) sont réalisés sur le côté intérieur (3) de l'insert en élastomère (1).

4. Dispositif de raccordement (10) selon l'une des revendications précédentes, **caractérisé en ce que** la surface d'étanchéité (13) située sur la partie centrale (7) conique du raccord (5) est réalisée sous la forme d'une surface d'une partie d'aire latérale de cône.

5. Dispositif de raccordement (10) selon l'une des revendications précédentes, **caractérisé en ce que** la surface d'étanchéité (13) située sur la partie centrale (7) conique du raccord (5) est réalisée de façon à faire le tour de la partie centrale (7) conique.

6. Dispositif de raccordement (10) selon l'une des revendications précédentes, **caractérisé en ce que** l'insert en élastomère est constitué d'un matériau élastomère ou contient un matériau élastomère, le matériau élastomère étant de préférence une gomme ou un élastomère thermoplastique ou un caoutchouc ou un caoutchouc nitrile ou un caoutchouc butyle ou un EPDM (caoutchouc éthylène-propylène-diène) ou un SBR (caoutchouc styrène-butadiène) et/ou le raccord est constitué d'un matériau polymère ou contient un matériau polymère, le matériau polymère étant de préférence un thermoplastique, et de manière particulièrement préférée une polyoléfine, comme par exemple un polypropylène ou un polyéthylène ou un polybutylène, ou un copolymère des matériaux susmentionnés, ou une polyoléfine réticulée, en particulier un polyéthylène réticulé, ou un polychlorure de vinyle ou un polyuréthane.

7. Système de guidage, de réception et de stockage de fluide (20) comprenant une conduite secondaire, une conduite principale et/ou une gaine et/ou un mur, et un dispositif de raccordement (10) pour une conduite secondaire en combinaison avec une ouverture transversale dans une conduite principale, dans une gaine ou dans un mur selon l'une des revendications 1 à 6.
